# EUROPÄISCHE PATENTSCHRIFT

(11) **EP 1 214 136 B1**
(45) Veröffentlichungstag und Bekanntmachung des Hinweises auf die Patenterteilung: **15.10.2003**
(21) Anmeldenummer: 00953122.9
(22) Anmeldetag: 31.07.2000
(51) Int. Cl.: B01D 53/94, B01D 53/00, F01N 3/20

(54) **VORRICHTUNG ZUR PHOTOKATALYTISCHEN UMSETZUNG VON ABGASEN IN EINEM ABGASREINIGUNGSSYSTEM**
DEVICE FOR THE PHOTOCATALYTIC CONVERSION OF EXHAUST GAS IN AN EXHAUST GAS CLEANING SYSTEM
DISPOSITIF DE DECOMPOSITION PHOTOCATALYTIQUE DE GAZ D'ECHAPPEMENT DANS UN SYSTEME D'EPURATION DES GAZ D'ECHAPPEMENT

(30) Priorität: 03.08.1999 DE 19936354
(43) Veröffentlichungstag der Anmeldung: 19.06.2002
(73) Patentinhaber: Volkswagen Aktiengesellschaft, 38436 Wolfsburg (DE); Corning GmbH, 65189 Wiesbaden (DE)
(72) Erfinder: ENGELER, Werner, D-38527 Meine (DE); NEYER, Dieter, D-38444 Wolfsburg (DE); ZINK, Uwe, 65205 Wiesbaden (DE); CLAUS, Volker, 65191 Wiesbaden (DE)
(74) Vertreter: Meyer, Enno, Dr.
(86) Internationale Anmeldenummer: EP0007375
(87) Internationale Veröffentlichungsnummer: WO01008787

(56) Entgegenhaltungen:
- EP-A- 0 823 280
- US-A- 5 778 664
- US-A- 5 875 384
- PATENT ABSTRACTS OF JAPAN vol. 1999, no. 02, 26. Februar 1999 (1999-02-26) & JP 10 309438 A (MITSUBISHI MOTORS CORP), 24. November 1998 (1998-11-24) in der Anmeldung erwähnt

## Beschreibung

Die Erfindung betrifft eine Vorrichtung zur photokatalytischen Umsetzung von Abgasen in einem Abgasreinigungssystem gemäß dem Oberbegriff des Anspruchs 1.

Die hier zur photokatalytischen Umsetzung bestimmten Abgase stammen aus Brennkraftmaschinen. Die Verbrennungsprozesse in Brennkraftmaschinen verlaufen bei hohen Temperaturen und hohen Drücken. Der hierzu verbrannte Kraftstoff besteht aus Kohlenwasser-Stoffen und als Sauerstoffgeber wird Luft genommen. Dies führt dann dazu, daß in der Luft vorhandener Stickstoff zu Stickoxyden verbrannt wird, während im Kraftstoff vorhandene polyzyklische Kohlenwasserstoffe nur unvollständig verbrannt werden. Das Abgas enthält daher unter anderem Kohlenmonoxid, polyzyklische Kohlenwasserstoffe und/oder Stickoxide. Diese drei Bestandteile werden als hauptsächliche Schad-stoffe in Abgasen betrachtet. Um diese Schadstoffe in den Abgasen zu vermindem, kommen hauptsächlich edelmetallbeschichtete Katalysatoren zum Einsatz. Hierbei wird vor allem auf das Edelmetall Platin zurückgegriffen, da es anderen Metallen überlegen ist Dies beruht darauf, daß Platin gegenüber Kohlenmonoxid und polyzyklischen Kohlenwasserstoffen bereits bei niedrigen Temperaturen um ca. 140°C katalytisch aktiv ist. Der Platinkatalysator verträgt jedoch auch höhere Temperaturen, ohne daß das Platin dadurch abgetragen wird. Dies bedingt eine lange Standzeit des Platinkatalysators. Seine primäre Wirkung erzielt er dadurch, daß er Kohlenmonoxid und polyzyklische Kohlenwasserstoffe zu Kohlendioxyd oxidiert und dabei gleichzeitig Stickoxyde reduziert. Die durch Katalyse herbeigeführte Reduktion von Stickoxyden ist je nach Verwendung des Katalysators stark temperaturabhängig und kann ihr Maximum bereits bei Temperaturen unter 100°C erreichen.

Aus der DE-OS 36 42 018 ist ein Katalysator zur katalytischen Umsetzung von Stickoxyden mit Kohlenwasserstoffen bekannt. Dieser beruht auf Zeolithbasis. Die Umsetzung der Stickoxyde ist hier von der Konzentration der Kohlenwasserstoffe in dem zu behandelnden Abgas abhängig. Bei einem Verhältnis von Stickoxyden zu polyzyklischen Kohlenwasserstoffen von 1:1 ist eine ca. 50 %ige Reduktion der Stickoxyde möglich. Solche Zeolithkatalysatoren lassen sich auch zusammen mit den üblichen Edelmetallkatalysatoren verwenden.

Die US-PS 4,980,040 offenbart ein Verfahren zur Steigerung einer thermokatalytischen Umsetzung von Stickoxyden in Stickstoff und Sauerstoff. Dabei wird eine beheizte zur thermischen Katalyse fähige Metalloxidfläche zur Steigerung des Katalyseumsatzes mit Licht be-strahlt. Das Licht ist auf die Absorptionsfähigkeit der erhitzten Katalyseoberfläche abgestimmt. Dieses Verfahren setzt eine mindestens 100°C und höchstens 400°C heiße thermokatalytisch wirksame Metall-oxidfläche voraus. Der Lichteinfall erfolgt von außerhalb der Katalysekammer durch eine transparente Wand/Decke auf die katalytisch wirkende Fläche. Die notwendige Erhitzung von thermokatalytisch tätiger Metalloxidfläche und dem zu reduzierenden Stickoxid-Gasgemisch setzt einen erheblichen Energieaufwand voraus. Zum weiteren ist die Lichteinstrahlung durch das Gehäuse und die gesamte Stickoxid-Gasschicht bis zur thermokatalytisch wirkenden Fläche durch einen hohen Lichtverlust wegen Absorptions- und Streuprozessen belastet

Zusätzlich zu den oben genannten Schadstoffen sind die Abgase von Brennkraftmaschinen häufig auch mit Rußpartikeln versetzt. Diese schlagen sich auch auf dem nicht transparenten Teil des Katalysatorgehäuses der obigen Erfindung nieder. Zusammen mit polyzyklischen Kohlenwasserstoffen ergibt dies eine ziemlich klebrige Mischung. Dies führt augenblicklich zu einer erheblichen Einbuße an Licht, da erhebliche Teile zurückgestrahlt beziehungsweise in der Rußschicht absorbiert werden. Daher ist dieses Verfahren zur katalytischen Umsetzung von Abgasen aus Brennkraftmaschinen nicht geeignet.

Die US-PS 5,800,789 offenbart die Verbesserung eines thermi-schen Katalysators für die sogenannte Startphase. Wenn eine Brennkraftmaschine gestartet wird, sind die daraus entfliehenden Abgase im Vergleich zu den Abgasen bei Erreichen der vollen Betriebstemperatur kühl. Die meisten der heute bekannten thermischen Katalysatoren beziehen ihre Wärmeenergie zur katalytischen Wirkung aus der Wärme der sie überströmenden Abgase. Die niedrige Temperatur der Abgase in der Startphase einer Brennkraftmaschine reicht dann nicht aus, um an einem von der Abgaswärme aktiviertem thermischem Katalysator die volle katalytische Wirkung zu erreichen. Dagegen soll ein elektrisches Vorheizen des Katalysators helfen. Diese Methode löst nicht das Problem der unvollständigen Reduktion im Betriebsmodus, so wie die im Betriebsmodus stattfindende Produktion von N₂O.

Die US-PS 4,753,919 beschreibt eine in Zick-Zack Form gefaltete katalytische Fläche. Dies ist eine Konstruktionsbeschreibung, die aber zu keiner verbesserten katalytischen Leistung im Betriebsmodus führt.

Die US-PS 5,468,699 offenbart ein Verfahren zur Herstellung von photokatalytischen Oberflächen aus Halbleitermaterial auf zeolithischem Untergrund, um diese Untergrundstruktur zur Oberflächenbildung zu nutzen. Dabei geht es um die Herstellung eines photokatalytischen Umsetzers mit einer möglichst großen Oberfläche. Dabei spielt der Beschichtungsweg, der Auftrag des Halbleitermaterials durch Lösung in pH-bestimmten Gelen eine Rolle, aber nicht das katalytische Umsetzen von Abgasen aus Brennkraftmaschinen.

Die JP 10-309438 offenbart eine Vorrichtung zur photokatalytischen Umwandlung von Abgasen mit UV-Licht. Hierzu wird das Licht von außen in das Katalysatorgehäuse gestrahlt, indem in das Gehäuse ein lichtdurchlässiges Stück eingepaßt ist. Von einer Stelle an der Innenseite des Katalysatorgehäuses wird das Licht von dem lichtdurchlässigen Stück in einem flachen Winkel auf die zuoberst liegende Katalysatorschicht gestrahlt. Von der zuoberst liegenden Schicht pflanzt sich das Licht durch diffuse Transmission an der das photokatalytisch aktive Material tragenden Oberfläche durch den Katalysator fort. Diese Vorrichtung ist auf eine extreme Vorreinigung der ankommenden Abgase angewiesen. Sie ist, aufgrund der Einstrahlung und der für die Lichtausbreitung nötigen Transmissions- und Reflektionseigenschaften u.a. der Gehäuseinnenseiten, extrem störanfällig für Verunreinigungen. Ein Teil der eigentlich zur Katalyse vorgesehenen Fläche muß für den Transmissionseffekt in seiner katalytischen Leistung beschränkt werden. Das bedeutet, daß die Katalyse entweder auf den der Einstrahlposition nächsten Flächen wegen der notwendigen maximalen Transmissionseffekte oder auf den beschatteten Flächen wegen mangelnder Lichtversorgung nicht optimal sein kann. Zudem leidet das System auch unter extremen Lichtverlusten durch Absorptionsprozesse innerhalb des Abgases.

Die oben beschriebenen thermischen Katalysatoren haben den Nachteil, daß bei ihnen unter anderem auch N₂O produziert wird, das allgemein als ozonschädliches Gas betrachtet wird. Das photokatalytische Verfahren setzt eine vorgeheizte thermisch aktive katalytische Fläche sowie ein vorgeheiztes beziehungsweise vorzuheizendes Stickoxidgasgemisch voraus. Zudem findet die Belichtung der thermisch aktiven katalytischen Fläche zur Steigerung der Katalysefähigkeit durch zusätzliche photokatalytische Eigenschaften von außerhalb des Raumes, in dem die Reaktion stattfindet, statt. Wie oben erwähnt sind Rußpartikel Bestandteile der Abgase von Brennkraftmaschinen. Diese verbinden sich mit polyzyklischen Kohlenwasserstoffen. Dies verleiht den Rußpartikeln stark anhaftende Eigenschaften. Dadurch werden entsprechend aufnahmefähige Oberflächen schnell stark benetzt. Dies führt dann dazu, daß bei der oben beschriebenen Methode zur Abgasreinigung die lichtdurchschienene Gehäusefläche durch die Benetzung mit Rußpartikeln lichtundurchlässig wird. Zudem benötigt diese Art der photokatalytischen Aktivierung thermokatalytisch aktiver Flächen sehr viel Platz.

EP-A-0 823 280 beschreibt einen Filter zum Filtern der Abgaspartikel einer Dieselbrennkraftmaschine, wobei das Filtermaterial bzw. der Filterkörper aus einem Glasmaterial besteht, dessen Oberfläche mit einem photokatalytischen Material beschichtet ist. Die beschichteten Lichtleiter sind dabei zu einem in Abgasrichtung verlaufenden Bündel zusammengefaßt.

US-A-5 778 664 offenbart einen mit einem photokatalytischen Material beschichteten Lichtleiter, der in Abgasströmungsrichtung verlaufend in einem Abgasreinigungssystem angeordnet ist.

Es stellt sich daher die Aufgabe, einen räumlich kompakten photokatalytisch aktiven Abgasumsetzer bereit zu stellen, bei dem die Lichtbeaufschlagung von photokatalytisch unwirksamen Streu- und Absorptionsflächen freigestellt ist und bei dem die N₂O-Synthese zumindest wesentlich unterbleibt

Diese Aufgabe wird gelöst durch die Merkmale des Anspruchs 1. Bevorzugte Ausgestaltungen der Erfindung sind Gegenstand der Unteransprüche.

Die Vorteile der Erfindung liegen in einer höheren Umsetzung der Abgase an den photokatalyrtisch wirksamen Flächen. Die Lichtverluste durch das zu durchquerende Abgas werden minimiert bzw. in einem Ausführungsbeispiel gänzlich aufgehoben. Es werden keinerlei Reflektionsmechanismen innerhalb des Gehäuses und/oder zwischen den photokatalytisch wirksamen Flächen benötigt Es sind keine lichtemittierenden Prozesse von seiten der photokatalytisch wirksamen Fläche nötig. Dadurch steht die gesamte photokatalytisch wirksame Fläche 100% für die katalytische Umsetzung der Abgase zur Verfügung. Als Trägermaterial dienen herkömmliche Monolithen, wie sie auch bei der thermischen Katalyse Verwendung finden. Es muß nur auf die Aufnahmefähigkeit für die Lichtleiter geachtet werden. Die Beschichtung ist dann nicht mehr Platin oder ein anderes Edelmetall aus der Platingruppe, sondem z.B. Titandioxid oder ein anderes photokatalytisch wirksames Material. Dadurch, daß die üblichen Monolithen benutzt werden, sind auch die üblichen Gehäuse nutzbar, die nur mit einer Eintrittsöffnung für den Lichtleiter/das Lichtleiterbündel versehen werden müssen. Dies bedeutet, das die Erfindung problemlos in bisherige Fertigungsprozesse integriert werden kann. Dies bedeutet geringe Umrüstzeiten und -kosten. Dieses ermöglicht die Einführung der neuen Technologie, ohne das dies zu einer extremen Verteuerung des Produktes führt Die kostengünstige Verbesserung des Produktes führt zu einer Wettbewerbsverbesserung.

Sofem es nicht ausdrücklich anders gesagt ist, gelten alle Aussagen für Lichtleiter sinngemäß auch für Lichtleiterbündel. Dabei ist ein Lichtleiterbündel die Zusammenfassung mehrerer einzelner Lichtleiter. Wesentlich für die Erfindung ist, daß das Licht direkt zu der photokatalytischen Fläche gebracht wird. Die Erfindung hat erkannt, daß eine Lichtemission aus einer Lichtquelle möglichst nahe am photokatalytischen Material erfolgen sollte. Weiter hat die Erfindung erkannt daß der Lichtieiter die Funktion als Lichtquelle übernehmen kann. Durch die Heranführung des Lichtleiters als Lichtquelle an die katalytische Fläche wird eine Verringerung der Strahlungsintensität durch Strahlungsverluste aufgrund des Abstands vermieden. Dadurch, daß nur geringe Abgasschichten durchquert werden müssen, werden Streubeziehungsweise Absorptionsprozesse erheblich reduziert In einem ersten Ausführungsbeispiel werden die Streu- beziehungsweise Absorptionsprozesse weitestgehend ausgeschlossen dadurch, daß der Lichtleiter nur gering von der photokatalytisch wirkenden Fläche beabstandet ist. In einem zweiten Ausführungsbeispiel werden die Streu- beziehungsweise Absorptionsprozesse komplett ausgeschlossen dadurch, daß der Lichtleiter mit dem photokatalytischen Material beschichtet ist

Durch das Zubringen des Lichtes mittels der Lichtleiter konnte der Ort der Lichterzeugung vom Ort des Lichtbedarfes, der photokatalytischen Fläche, getrennt werden. Zur Lichterzeugung können Glühbimen, Gasdrucklampen, Metalldampfdrucklampen, Laser oder ähnliches dienen. Die Trennung vom Ort der Lichterzeugung und dem des Lichtbedarfes ist entgegen erster Erwartungen sogar mit einem Qualitätsgewinn bei der Katalyse verbunden. Lichtleiter können sehr dünn gefertigt werden. Dadurch kann die Beabstandung von der photokatalytisch wirksamen Fläche gering gehalten werden. Dies erhöht die Anzahl der auf die photokatalytisch aktiven Fläche auftreffenden Lichtteilchen. Zudem sind die photokatalytisch wirkenden Flächen auf ein kleineres Raumvolumen zusammenführbar. Dabei bestimmt sich der Abstand zweier Katalysatorflächen durch den Strömungswiderstand. Dieser Strömungswiderstand ergibt sich als Zusammenwirkung der Katalysatorflächen mit dem zwischengeführten Lichtleiter und dem durchströmenden Abgas. Der Abstand wird dann nach Stand der Technik so gewählt, daß der Betrieb der Brennkraftmaschine problemlos möglich ist Das heißt, es bildet sich kein Abgasrückstau.

Im folgenden wird die Erfindung an Hand von Ausführungsbeispielen näher erläutert, und zwar zeigen die Figuren 1 bis 4 einige bevorzugte Ausgestaltungen der Erfindung.
- Figur 1:: Katalysator mit einem mit photokatalytisch wirksamen Material beschichtetem Monolithen und eingeführten Lichtleitern
- Figur 2:: Katalysator aus mit photokatalytisch wirksamen Material beschichteten Lichtleitern
- Figur 3:: Katalysator mit einem mit photokatalytisch wirksamen Material beschichteten Monolithen und eingeführtem und umgelenkt direkt wieder durchgeführtem Lichtleiter
- Figur 4:: Katalysator mit einem mit photokatalytisch wirksamen Material beschichtetem onolithen und mit eingeführtem und dann um den Monolithen geführtem und dann wieder durch den Monolithen geführtem Lichtleiter

Sofern im folgenden nichts anderes gesagt ist, gilt die folgende Beschreibung stets für alle Figuren.

Darstellt ist ein Abgasreinigungssystem 1 mit einem Gehäuse 2 mit einem oder mehreren Abgaszugängen 3 durch die das Abgas 4 in Strömungsrichtung 5 durch einen Abgasreiniger 6 zu einem oder mehreren Abgasausgängen 7 strömt.

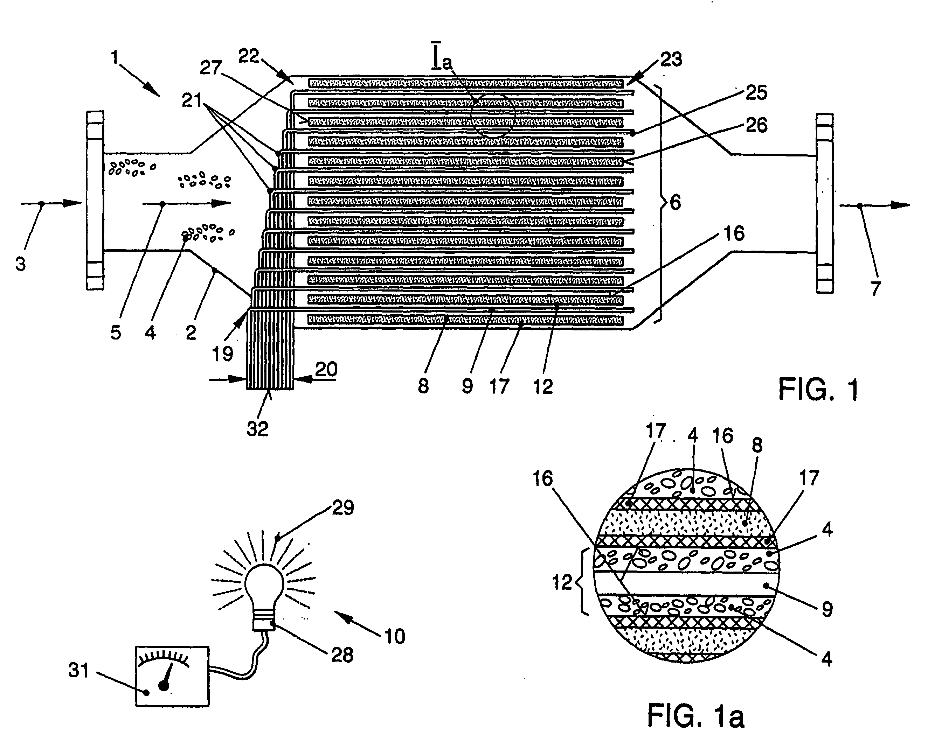

In Fig.1 besteht der Abgasreiniger 6 aus den Komponenten beschichteter Monolith 8, Lichtleiter 9 und Lichtquelle 10. Der Monolith 8 besteht aus einem Keramik- oder Metallkörper, der in Abgasströmungsrichtung 5 von feinen parallel verlaufenden Röhren 12 durchzogen ist. Fein bedeutet hier, daß im Hinblick auf den Strömungswiderstand durch einen verringerten Querschnitt und die zu erreichende, für den ungünstigsten Betriebsverlauf ausgelegte, katalytisch aktive Mindestfläche ein Kompromiß gefunden wird. Diese Röhren 12 sind auf ihren Abgaskontaktflächen 16 mit einer photokatalytisch aktivierbaren Beschichtung 17 versehen. Die Beschichtung 17 ist das Katalysatormaterial. Photokatalytisch aktivierbar bedeutet, daß das Katalysatormaterial unter Lichtbeaufschlagung überhaupt erst, oder vermehrt katalytisch tätig ist. Dabei hat das beaufschlagende Licht 29 eine auf das Katalysatormaterial abgestimmte Wellenlänge. Die Lichtleiter 9 werden an mindestens einer Eintrittsstelle 19 als Lichtleiterbündel 20 quer zur Abgasströmungsrichtung 5 in das Gehäuse 2 geführt. Ebenso ist es allerdings auch ausführbar, daß der Lichtleiter 9 irgendwo im Gehäuse 2 des Abgasreinigungssystems 1 beginnt. Dabei ist nur dafür zu sorgen, daß der Lichtleiter 9 hinreichend mit Licht 29 beaufschlagt wird.

Im Gehäuse 2 werden die Lichtleiter 9 einzeln parallel zur Strömungsrichtung 5 durch eine Umlenkung 21 zum Monolithen 8 geführt. Nach der Umlenkung 21 wird an dem stromauf liegenden Monolithenende 22 jeweils ein Lichtleiter 9 in eine ihm zugeordnete Röhre 12 des Monolithen 8 eingeführt. Der Lichtleiter 9 endet an dem stromabliegenden Monolithenende 24. Durch die geringfügig über das Monolithenende 24 hinausragenden Enden 25 der Lichtleiter 9 wird auch die dem Monolithenende 24 zugehörige Stimfläche 26 zur Photokatalyse mit Licht 29 versorgt. Die stromauf liegende Stimfläche 27 des Monolithenendes 22 wird durch die in die Röhren 12 eindringenden Lichtleiter 9 mit Licht 29 versorgt.

Das Abgas 4 strömt nun durch die Röhren 12 des Monolithen 8 zwischen Lichtleiter 9 und der Röhreninnenseite/Abgaskontaktfläche 16 in Strömungsrichtung 5 zum Abgasausgang 7 und wird bei Kontakt mit dem Katalysatormaterial umgewandelt. Diese Umwandlung geschieht photokatalytisch. Durch eine geschickte Abstimmung des aufgetragenen Katalysatormaterials sowie einer darauf abgestimmten Variation des Brechungsindex der Lichtleiter 9 kann dafür gesorgt werden, daß über die Gesamtfläche des Katalysatormaterials pro Längeneinheit des Monolithen 8 eine konstante Abgasumsetzung stattfindet. Durch die direkte Bestrahlung mit Licht 29 werden Absorbtionsverluste im Abgas 4 und dem Umgebungsmaterial des Gehäuses 2 minimiert. Durch eine entsprechende Wahl des Lichtleiters 9, bzw. der Lichtquelle 10 kann so eine auf maximale Katalysewirkung zielende Lichtmenge auf das Katalysatormaterial beaufschlagt werden.

Durch spektralanalytische Untersuchungen des Abgases 4 kann die Absorptionskurve des Abgases 4 bestimmt werden. Aus dieser Kurve läßt sich dann ein Katalysatormaterial bestimmen, dessen photokatalytisch aktive Frequenzen möglichst wenig bis gar nicht vom Abgas 4 absorbiert werden. Zur Vermeidung von Rußverunreinigungen ist es denkbar, daß ein Abgasreinigungssystem mit thermischem Katalysator vorgeschaltet wird. An diesem thermischen Katalysator werden dann im Abgas 4 vorhandene polyzyklische Kohlenwasserstoffe und z.B. auch Stickoxide und Kohlenmonoxid umgewandelt. Bei der Durchführung der Lichtleiterinstallation, ist es denkbar, die Lichtleiter 9 austauschbar mit dem Monolithen 8 zu verbinden. Dies erleichtert später die Wiederaufbereitung des Monolithen 8 und/oder des Lichtleiters 9. Zudem ist es bei Katalysatorinspektionen gegebenenfalls möglich, den Zustand der Lichtleiter zu überprüfen und nötigenfalls auszutauschen, so daß nicht der komplette Monolith oder Katalysatorkem ausgetauscht werden muß, sondern einfach nur die Lichtleiter 9.

Die Lichtquelle 10 besteht aus einer oder mehreren Mono- oder Mehrspektrallampen 28, wie zum Beispiel Quecksilberdampf-/Hochdrucklampen, Natriumdampf/-Niederdrucklampen, Xenonhochdrucklampen usw. Ist der Lichtleiter 9 von außerhalb des Gehäuses 2 zugeführt, können eine oder auch alle Lichtquellen außerhalb des Gehäuses 2 vorgesehen sein. Aufgrund der allgemeinen Aktivierungsenergien für photokatalytische Materialien ist darauf zu achten, daß das Lichtleitermaterial der Lichtleiter 9 UV-Licht leitfähig ist. Die Lichtquelle 10 speist das Licht 29 in einer oder mehreren Wellenlängen in den Anfang 32 des Lichtleiters 9 ein. Die Wellenlängen sind auf das Katalysatormaterial abgestimmt. Die eingespeiste Lichtstärke ist zuvor bei analytischen Untersuchungen als optimal bestimmt worden. Es ist auch denkbar, daß diese Lichtstärke in Abhängigkeit des Abgases 4 von außen durch einen Regler 31 gesteuert wird.

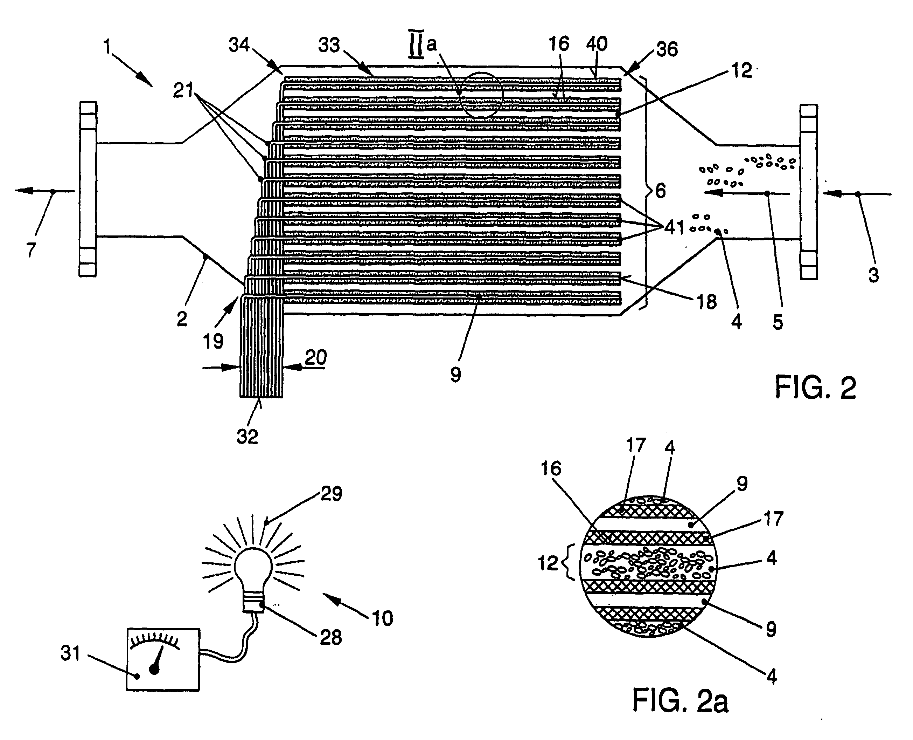

Fig.2 ist ähnlich aufgebaut wie Fig.1, im Gehäuse 2 ist der Abgasreiniger 6 eingebracht. Der Abgasreiniger 6 besteht hier aus der Lichtquelle 10 und dem Lichtleiter 9 mit einer Beschichtung 17. Die Beschichtung 17 besteht auf ihrer Abgaskontaktseite 16 aus einem photoaktivierbarem Katalysatormaterial. Der Lichtleiter wird an einer Eintrittsstelle 19 quer zur Abgasströmungsrichtung 5 in das Gehäuse 2 geführt und dann durch eine Umlenkung 21 parallel zur Strömungsrichtung 5 gebracht. Die Beschichtung 17 der Lichtleiter 9 beginnt hier nach der Umlenkung 21 der Lichtleiter 9 parallel zur Strömungsrichtung 5. Die Beschichtung 17 endet am Lichtleiterende 18. Nach der Umlenkung 21 sind die Lichtleiter 9 unter Freilassung dazwischenliegender Strömungskanäle 12 zu einem Lichtleiterbündel 33 zusammengefaßt. Das Lichtleiterbündel 33 verläuft längs im Gehäuse 2 mit im wesentlich in Abgasströmungsrichtung 5 verlaufenden Lichtleiterabschnitten, wobei die Länge der in Abgasströmungsrichtung 5 verlaufenen Lichtleiterabschnitte ein Vielfaches von der senkrecht zur Abgasströmungsrichtung gemessenen Breite ist.

Eine Besonderheit besteht darin, daß mehrere Lichtleiter 9 ein Lichtleiterbündel 20 bilden, und daß dieses Lichtleiterbündel 20 nach der Umlenkung 21 der einzelnen Lichtleiter 9 ein Lichtleiterbündel 33 aus beschichteten Lichtleitern bildet. Der Lichtleiterbündelanfang 34 liegt stromauf der Umlenkung 21 am Beginn der Beschichtung 35. Das Lichtleiterbündelende 36 fällt mit dem Lichtleiterende 18 zusammen. Das Lichtleiterbündel 33 füllt den Raum des Gehäuses 2 quer zur Strömungsrichtung 5 so dicht aus, daß dazwischenliegende Strömungskanäle 12 frei bleiben. Die einzelnen Lichtleiter 9 liegen dabei so, daß zwischen ihnen hinreichend große Hohlräume für das Durchströmen des Abgases 4 bestehen. Die Hohlräume reichen von Lichtleiterbündelanfang 34 bis -bündelende 36. Die äußersten Lichtleiter 9 kontaktieren die Innenseite 40 des Gehäuses 2. Dadurch kann das Abgas 4 nicht an dem Lichtleiterbündel 33 vorbei strömen. Das Abgas 4 strömt nun, von Abgaseingang 2 kommend, auf die stromauf liegenden Stirnseiten 41 der Lichtleiter 9 beziehungsweise des Lichtleiterbündels 33. Dann strömt das Abgas 4 in die Hohlräume und damit durch das Lichtleiterbündel 33 bis zum Bündelende 36 und weiter Richtung Abgasausgang 7 hinaus. Bei Kontakt mit dem Katalysatormaterial wird das Abgas 4 photokatalytisch umgewandelt. Durch die direkte Bestrahlung mit dem Licht 29 auf das Katalysatormaterial durch den Lichtleiter 9 wird jedwede Absorption durch das Abgas 4 oder Gehäuse 2 verhindert. Der Lichtleiter wird durch die Beschichtung 17 vor Verschmutzung durch z:B. Ruß oder Teer oder Ähnlichem geschützt. Der Lichtleiter 9 behält dank der Beschichtung 17 seine volle Leuchtstärke. Durch entsprechende Wahl des Lichtleiters 9, der Lichtquelle 10, der Beschichtung 17 kann so eine auf maximale Katalysewirkung zielende Lichtmenge auf das Katalysatormaterial beaufschlagt werden.

Hinsichtlich der Art der Beleuchtung wird auf die Beschreibung von Fig.1 verwiesen.

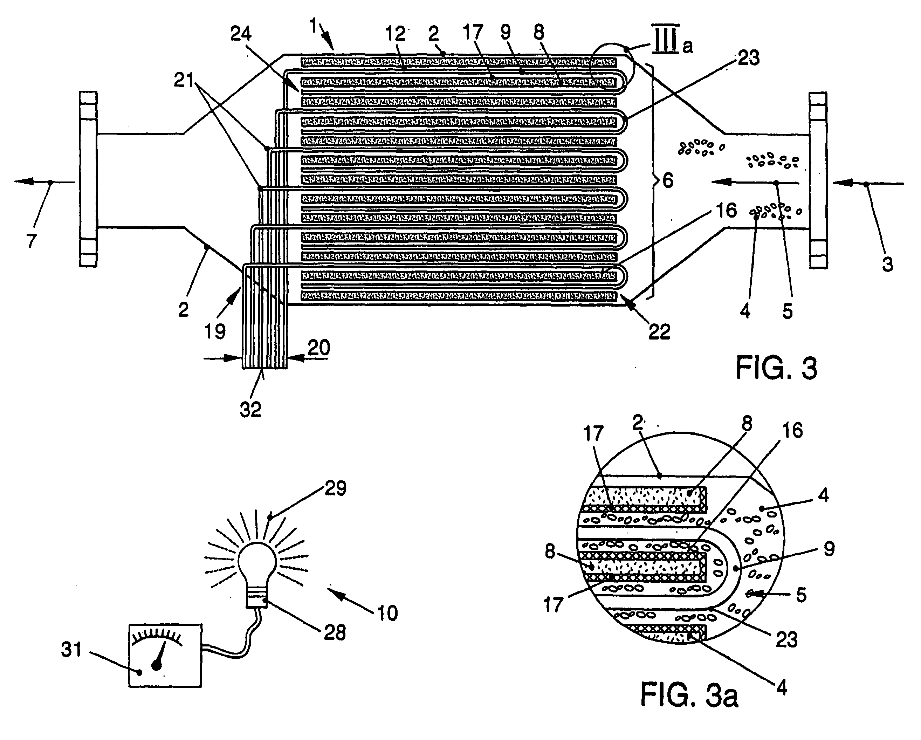

In Fig.3 besteht der Abgasreiniger 6 aus der Lichtquelle 10, dem Monolithen 8 mit der photokatalytischen Beschichtung 17 und dem Lichtleiter 9. Der Monolith 8 ist ein Keramik- oder Metallkörper, der in Abgasströmungsrichtung 5 von feinen parallel verlaufenden Röhren 12 durchzogen ist. Fein ist hier analog zur Beschreibung der Fig.1 gemeint. Der Aufbau des Monolithen 8 ist analog zur Fig.1. Die Lichtleiter 9 werden an mindestens einer Eintrittsstelle 19 als Lichtleiterbündel 20 quer zur Abgasströmungsrichtung 5 in das Gehäuse 2 geführt. Im Gehäuse 2 werden die Lichtleiter 9 einzeln parallel zur Strömungsrichtung 5 durch eine Umlenkung 21 zum Monolithen 8 geführt. Nach der Umlenkung 21 wird an dem stromab liegenden Monolithenende 24 ein Lichtleiter 9 in eine Röhre 12 des Monolithen 8 eingeführt. Der Lichtleiter 9 tritt an dem stromauf liegenden Monolithenende 22 aus dem Monolithen 8 heraus. Der Lichtleiter 9 erfährt dort eine Kehrtwendung 23. Nach der Kehrtwendung 23 wird der Lichtleiter 9 am stromauf liegenden Monolithenende 22 in eine freie Röhre 12 des Monolithen 8 eingeführt. Es besteht jetzt die Möglichkeit, das der Lichtleiter 9 am stromab liegenden Monolithenende 24 endet, oder eine erneute Kehrtwendung 23 erfährt. Dann würde der Lichtleiter 9 erneut in den Monolithen 8 eingeführt. Je nach Anzahl der sich wiederholenden Durchführungen des Lichtleiters 9 durch den Monolithen 8 ist darauf zu achten, daß die Länge des Lichtleiters auf diese Anzahl der Durchführungen abgestimmt ist, so daß der Lichtleiter 9 immer an einem der beiden Enden des Monolithen 8 endet.

Hinsichtlich der Art der Beleuchtung wird auf die Beschreibung von Fig.1 verwiesen.

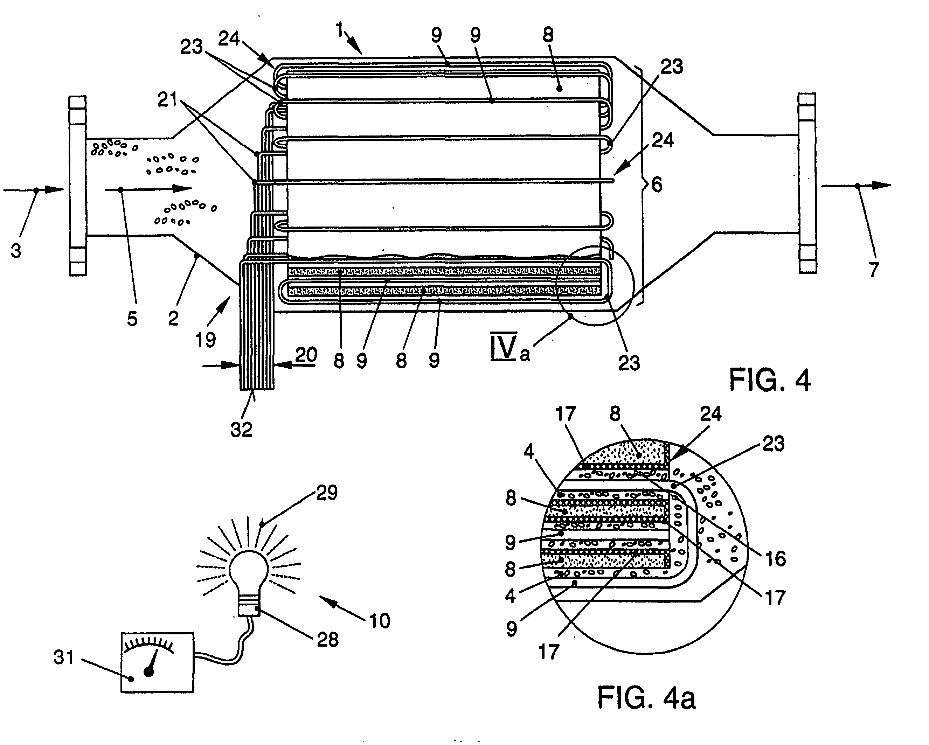

In Fig.4 besteht der Abgasreiniger 6 aus den Komponenten: beschichteter Monolith 8, Lichtleiter 9 und Lichtquelle 10. Der Monolith ist analog zur Beschreibung in Fig.1. Die Lichtleiter 9 betreten hier als Lichtleiterbündel 20 an der Eintrittsstelle 19 das Gehäuse 2 und werden an einer Umlenkung 21 zum Monolithen 8 geführt. Nach der Umlenkung 21 werden die Lichtleiter 9 einzeln am stromauf liegenden Monolithenende 22 in freie Kanäle 12 des Monolithen 8 eingeführt und verlassen den Monolithen 8 am stromab liegenden Monolithenende 24. Nach dem Verlassen des Monolithen 8 erfahren die Lichtleiter 9 eine Kehrtwendung 23. Nach der Kehrtwendung 23 werden die Lichtleiter 9 um den Monolithen 8 herum zum stromauf liegenden Monolithenende 22 geführt. Dort erfahren die Lichtleiter eine emeute Kehrtwendung 23. Nach dieser Kehrtwendung 23 werden die Uchtleiter in noch freie Kanäle 12 des Monolithen 8 eingeführt. Die Länge des Lichtleiters 9 ist so abgestimmt, daß der Lichtleiter 9 entweder am stromab liegenden Monolithenende 24 endet, oder so lang ist, um eine emeute Kehrtwendung 23 zu erfahren, um wieder um den Monolithen 8 herumgeführt zu werden, um am stromauf liegenden Monolithenende 22 eine emeute Kehrtwendung 23 zu erfahren, um dann wieder in einen freien Kanal 12 des Monolithen 8 eingeführt zu werden. Die Länge des Lichtleiters 9 ist auf die Anzahl der hier dargestellten Führungsschritte abgestimmt. Der Lichtleiter 9 ist auf jeden Fall so lang, um mindestens einmal den Monolithen 8 von dem stromauf liegenden Monolithenende 22 bis zum stromab liegenden Monolithenende 23 zu durchqueren. Der Lichtleiter ist so lang, daß er auf jeden Fall am hier stromab liegenden Monolithenende 24 endet Für alles übrige in Fig.4 dargestellte, gilt was für Fig.1 bis 3 gesagt wurde.

### BEZUGSZEICHENLISTE

- 1: Abgasreinigungssystem
- 2: Gehäuse
- 3: Abgaszugang
- 4: Abgas
- 5: Strömungsrichtung
- 6: Abgasreiniger
- 7: Abgasausgang
- 8: Monolith
- 9: Lichtleiter
- 10: Lichtquelle
- 12: Röhren
- 16: Abgaskontaktfläche
- 17: Beschichtung
- 18: Lichtleiterende
- 19: Eintrittsstelle
- 20: Lichtleiterbündel
- 21: Umlenkung
- 22: Monolithenende stromauf
- 24: Monolithenende stromab
- 25: Enden
- 26: Stimfläche des Monolithenendes
- 27: Stimfläche des Monolithenendes
- 28: Spektrallampe
- 29: Licht
- 31: Lichtstärkeregler
- 32: Lichtleiteranfang
- 33: Bündel
- 34: Bündelanfang
- 35: Beschichtungsanfang
- 36: Bündelende
- 40: Wicklungsstrecke
- 39: Wicklungsumkehrung
- 41: Innenseite
- 42: Windung
- 43: Verbiegung

## Patentansprüche

1. Vorrichtung zur photokatalytischen Umsetzung von Abgasen (4) in einem Abgasreinigungssystem (1) das aus einem Gehäuse (2) mit Abgaszü-(5) und Abgasausgang (7) besteht, mit einem eingebrachten Abgasreiniger (6) aus einem vom Abgas (4) überströmten Trägermaterial, dessen Abgaskontaktflächen (16) eine Beschichtung (17) aus einem photokatalytisch aktivierbarem Katalysatormaterial aufweisen, die mit Licht (29) beaufschlagt werden, wobei das Licht (29) in einen Lichtleiter (9) eingekoppelt wird, der im wesentlichen parallel zur Abgaskontaktfläche (16) durch den Abgasreiniger (6) läuft und der das Licht (29) zum photokatalytisch aktivierbaren Katalysatormaterial hin emittiert, **dadurch gekennzeichnet, daß** das Trägermaterial (11) ein Monolith (8) ist, der mit feinen parallelen geradlinigen Röhren (12) durchzogen ist, die in Strömungsrichtung (5) des Abgases (4) verlaufen, mit dem photokatalytisch aktivierbaren Katalysatormaterial beschichtet sind und in denen die Lichtleiter angeordnet sind.

2. Vorrichtung nach Anspruch 1, **dadurch gekennzeichnet, daß** der Brechungsindex des Lichtleitermaterials so abgestimmt ist, daß aus dem Lichtleiter (9) das Licht (29) quer zur photokatalytisch wirksamen Fläche/Abgaskontaktfläche (16) emittiert wird.

3. Vorrichtung nach einem der vorangegangenen Ansprüche, **dadurch gekennzeichnet, daß** der Brechungsindex so abgestimmt ist, daß das Licht (29) parallel zur Flächennormalen der photokatalytisch wirksamen Fläche/Abgaskontaktfläche (16) emittiert wird.

4. Vorrichtung nach einem der vorangegangenen Ansprüche, **dadurch gekennzeichnet, daß** durch eine Abstimmung des Brechungsindex bzw. des Katalysatormaterials über die Länge des Lichtleiters (9) bzw. über die Länge der photokatalytisch wirksamen Abgaskontaktfläche (16) im wesentlichen eine konstante Reduktion der Schadstoffe pro Längeneinheit erfolgt.

5. Vorrichtung nach einem der vorangegangenen Ansprüche, **dadurch gekennzeichnet, daß** mindestens ein Lichtleiter (9) von außen in das Gehäuse (2) eingeführt wird.

6. Vorrichtung nach Anspruch 5, **dadurch gekennzeichnet, daß** der Lichtleiter (9) innerhalb des Gehäuses (2) parallel zur Strömungsrichtung (5) des Abgases (4) umgelenkt wird.

7. Vorrichtung nach einem der vorangegangenen Ansprüche, **dadurch gekennzeichnet, daß** mehrere Lichtleiter (9) zu einem Lichtleiterbündel (20) zusammengefaßt sind, und **daß** die Stimflächen der einzelnen Lichtleiter (9) mit dem Einstrahlwinkel des Lichtes (29) aus einer Lichtquelle (28) einen Winkel von 90° +/- 20° bilden.

8. Vorrichtung nach einem der Ansprüche 5 bis 7, **dadurch gekennzeichnet, daß** eine Lichtquelle (28), die ihr Licht (29) in den Lichtleiter (9) einkoppelt, außerhalb des Gehäuses (2) sitzt.

9. Vorrichtung nach einem der vorangegangen Ansprüche, **dadurch gekennzeichnet, daß** ein jeweils separater Lichtleiter (9) durch jeweils eine Röhre (12) geführt ist.

10. Vorrichtung nach einem der Ansprüche 1 bis 8, **dadurch gekennzeichnet, daß** ein einziger Lichtleiter (9) durch eine der Röhren (12) in die eine Richtung und durch eine andere Röhre (12) in die andere Richtung geführt wird.

11. Vorrichtung nach einem der Ansprüche 1 bis 8, **dadurch gekennzeichnet, daß** ein einziger Lichtleiter (9) an einer Stimseite (27) in den Monolithen (8) eingeführt wird, diesen auf der anderen Stimseite (26) wieder verläßt und um den Monolithen (8) geführt wird, wo er an der einen Stimseite (27) in den Monolithen (8) erneut eintritt.

12. Vorrichtung nach einem der vorangegangenen Ansprüche, **dadurch gekennzeichnet, daß** der Lichtleiter (9) leitfähig für UV-Licht im Wellenlängenbereich 300nm bis 600nm ist.

13. Vorrichtung nach einem der vorangegangenen Ansprüche, **dadurch gekennzeichnet, daß** die eingekoppelte Lichtmenge in Abhängigkeit vom Zustand des Abgases (4) geregelt wird.

14. Vorrichtung nach einem der Ansprüche 1 bis 9, **dadurch gekennzeichnet, daß** der Lichtleiter (9) austauschbar in den Röhren (12) eingebracht ist.

## Claims

1. Device for the photocatalytic conversion of exhaust gases (4) in an exhaust-gas purification system (1) which comprises a housing (2) with exhaust-gas inlet (5) and exhaust-gas outlet (7), having an introduced exhaust-gas purifier (6) comprising a support material over which the exhaust gas (4) flows and the exhaust-gas contact surfaces (16) of which have a coating (17) comprising a photocatalytically activable catalyst material, which are acted on by light (29), the light (29) being introduced into an optical fibre (9) which runs through the exhaust-gas purifier (6) substantially parallel to the exhaust-gas contact surface (16) and which emits the light (29) towards the photocatalytically activable catalyst material, **characterized in that** the support material (11) is a monolith (8) which has fine, parallel, rectilinear tubes (12) passing through it, which tubes run in the direction of flow (5) of the exhaust gas (4), are coated with the photocatalytically activable catalyst material and have the optical fibres arranged in them.

2. Device according to Claim 1, **characterized in that** the refractive index of the optical fibre material is adapted in such a way that the light (29) is emitted from the optical fibre (9) transversely with respect to the photocatalytically active surface/exhaust-gas contact surface (16).

3. Device according to one of the preceding claims, **characterized in that** the refractive index is adapted in such a way that the light (29) is emitted parallel to the surface normal to the photocatalytically active surface/exhaust-gas contact surface (16).

4. Device according to one of the preceding claims, **characterized in that** by adapting the refractive index or the catalyst material over the length of the optical fibre (9) or over the length of the photocatalytically active exhaust-gas contact surface (16), it is possible to effect a substantially constant reduction of the pollutants per unit length.

5. Device according to one of the preceding claims, **characterized in that** at least one optical fibre (9) is introduced into the housing (2) from the outside.

6. Device according to Claim 5, **characterized in that** the optical fibre (9), inside the housing (2), is diverted parallel to the direction of flow (5) of the exhaust gas (4).

7. Device according to one of the preceding claims, **characterized in that** a plurality of optical fibres (9) are combined to form a bundle (20) of optical fibres, and **in that** the end faces of the individual optical fibres (9) form an angle of 90° +/- 20° with the angle of incidence of the light (29) from a light source (28).

8. Device according to one of Claims 5 to 7, **characterized in that** a light source (28) which introduces its light (29) into the optical fibre (9) is positioned outside the housing (2).

9. Device according to one of the preceding claims. **characterized in that** in each case a separate optical fibre (9) is guided through in each case one tube (12).

10. Device according to one of Claims 1 to 8, **characterized in that** a single optical fibre (9) is passed through one of the tubes (12) in one direction and through another tube (12) in the other direction.

11. Device according to one of Claims 1 to B, **characterized in that** a single optical fibre (9) is introduced into the monolith (8) at an end side (27), leaves the monolith again at the other end side (26) and is guided around the monolith (8), where it is introduced back into the monolith (8) at the first end side (27).

12. Device according to one of the preceding claims, **characterized in that** the optical fibre (9) conducts UV light in the wavelength range from 300 nm to 600 nm.

13. Device according to one of the preceding claims, **characterized in that** the quantity of light introduced is controlled as a function of the state of the exhaust gas (4).

14. Device according to one of Claims 1 to 9, **characterized in that** the optical fibre (9) is introduced into the tubes (12) in such a manner that it can be replaced.

## Revendications

1. Dispositif pour la conversion photocatalytique de gaz de fumée (4) dans un système (1) d'épuration de gaz de fumée qui est constitué d'un caisson (2) doté d'une entrée (5) de gaz de fumée et d'une sortie (7) de gaz de fumée, dans lequel est installé un épurateur (6) de gaz de fumée constitué d'un matériau de support balayé par les gaz de fumée (4) et dont les surfaces (16) de contact avec les gaz de fumée présentent un revêtement (17) en un matériau catalyseur qui peut être activé par voie photocatalytique et qui reçoit de la lumière (29), la lumière (29) étant injectée dans un conducteur de lumière (9) qui s'étend essentiellement en parallèle à la surface (16) de contact avec les gaz de fumée en traversant l'épurateur (6) de gaz de fumée et qui émet la lumière (29) vers le matériau catalyseur qui peut être activé par voie photocatalytique, **caractérisé en ce que** le matériau de support (11) est un monolithe (B) qui est traversé par de fins tubes (12) rectilignes et parallèles qui s'étendent dans la direction d'écoulement (5) des gaz de fumée (4), qui sont revêtus par le matériau catalyseur qui peut être activé par voie photocatalytique et dans lesquels sont disposés les conducteurs de lumière.

2. Dispositif selon la revendication 1, **caractérisé en ce que** l'indice de réfraction du matériau conducteur de lumière est défini de telle sorte que la lumière (29) est émise hors du conducteur de lumière (9) transversalement par rapport à la surface (16) de contact avec les gaz de fumée ou surface photocatalytiquement active.

3. Dispositif selon l'une des revendications précédentes, **caractérisé en ce que** l'indice de réfraction est défini de telle sorte que la lumière (29) est émise parallèlement à la normale à la surface (16) de contact avec les gaz de fumée ou surface photocatalytiquement active,

4. Dispositif selon l'une des revendications précédentes, **caractérisé en ce que** par un accord entre l'indice de réfraction et le matériau catalyseur suivant la longueur du conducteur de lumière (9) ou suivant la longueur de la surface (16) de contact avec les gaz de fumée et photocatalytiquement active, on obtient une réduction essentiellement constante des produits nocifs par unité de longueur.

5. Dispositif selon l'une des revendications précédentes, **caractérisé en ce qu'**au moins un conducteur de lumière (9) est inséré dans le caisson (2) depuis l'extérieur.

6. Dispositif selon la revendication 5, **caractérisé en ce que** le conducteur de lumière (9) est dévié à l'intérieur du caisson (2) parallèlement à la direction d'écoulement (5) des gaz de fumée (4).

7. Dispositif selon l'une des revendications précédentes, **caractérisé en ce que** plusieurs conducteurs de lumière (9) sont rassemblés en un faisceau (2D) de conducteurs de lumière, et **en ce que** les surfaces frontales des conducteurs de lumière (9) individuels forment un angle de 90° +/- 20° avec l'angle d'injection de la lumière (29) par une source de lumière (28).

8. Dispositif selon l'une des revendications 5 à 7, **caractérisé en ce qu'**une source de lumière (28) qui injecte sa lumière (29) dans le conducteur de lumière (9) est placée à l'extérieur du caisson (2).

9. Dispositif selon l'une des revendications précédentes, **caractérisé en ce que** chaque conducteur de lumière (9) séparé est guidé dans un tube (12) respectif.

10. Dispositif selon l'une des revendications 1 à 8, **caractérisé en ce qu'**un seul conducteur de lumière (9) est guidé par l'un des tubes (12) dans une direction et par un autre tube (12) dans l'autre direction.

11. Dispositif selon l'une des revendications 1 à 8, **caractérisé en ce qu'**un seul conducteur de lumière (9) est inséré dans le monolithe (8) par un côté frontal (27), quitte le monolithe par l'autre côté frontal (26) et est guidé autour du monolithe (8) où il pénètre de nouveau dans le monolithe (8) par un côté frontal (27).

12. Dispositif selon l'une des revendications précédentes, **caractérisé en ce que** le conducteur de lumière (9) conduit la lumière UV dans la plage de longueur d'ondes de 300 nm à 600 nm.

13. Dispositif selon l'une des revendications précédentes, **caractérisé en ce que** la quantité de lumière injectée est régulée en fonction de l'état des gaz de fumée (4).

14. Dispositif selon l'une des revendications 1 à 9, **caractérisé en ce que** le conducteur de lumière (9) est inséré dans le tube (12) de manière à pouvoir être remplacé.
